# EUROPEAN PATENT SPECIFICATION

(11) **EP 1 137 979 B1**
(45) Date of publication and mention of the grant of the patent: **18.06.2003**
(21) Application number: 99948287.0
(22) Date of filing: 17.09.1999
(51) Int. Cl.: G06F 3/033, G06F 3/00, H04B 1/20

(54) **REMOTELY CONTROLLING ELECTRONIC DEVICES**
FERNSTEUERUNG VON ELEKTRONISCHEN VORRICHTUNGEN
COMMANDE A DISTANCE DE DISPOSITIFS ELECTRONIQUES

(30) Priority: 09.12.1998 US 208339
(43) Date of publication of application: 04.10.2001
(73) Proprietor: INTEL CORPORATION, Santa Clara, CA 95052 (US)
(72) Inventor: MARTIS, Thomas, Chandler, AZ 85226 (US); SHI, Jun, San Jose, CA 95119 (US); MISHRA, Animesh, Milpitas, CA 95035 (US)
(74) Representative: Wombwell, Francis
(86) International application number: US9921412
(87) International publication number: WO00034851

(56) References cited:
- EP-A- 0 626 635
- US-A- 5 410 326
- US-A- 5 710 605

## Description

### Background

This invention relates generally to remotely controlling electronic devices.

There are a very large number of commercially available remote control units (RCUs) that use an infrared signal to control an electronic device such as a television. Many users have elaborate systems of consumer electronic devices which may or may not be compatible with one another. For example, in a home theatre environment, the user may have a stereo sound system, a television, a video cassette recorder (VCR), a laser disc player and a digital video disc player (DVD). The user may desire to control each of these devices independently with a single RCU so that one device may be played when the others are off. This requires programming a number of functions into the RCU including on/off, channel change, volume change, program VCR and the like.

With conventional RCUs in systems with a number of remotely controlled electronic devices, the programming operation may be elaborate and time consuming. The user enters each device and programs the desired functionality into the RCU. The situation is complicated by the use of Infrared Data Association Control (IrDA-C) protocols. These protocols involve bi-directional signals which may not be compatible with the legacy unidirectional infrared control signals. Thus, different devices may use different infrared protocols and may require different command sets to operate them. All of this results in complexity to the user in programming the remote control to handle all of these possibilities.

The user may also wish to remotely control a computer system that operates in conjunction with a conventional television receiver. Computer systems, sometimes called set-top computer systems, may be of relatively small size, in some embodiments, and may be positioned on top of a television receiver. The addition of the set-top computer system adds still additional programming requirements on the remote control, further complicating user programming of a universal remote control which handles all of the different electronic devices. For example, the computer system may use the IrDA protocols while some other electronic devices may use the legacy protocols.

Thus, there is a continuing need for a way to program a remote control unit to handle a variety of electronic devices in a fashion which is easy and quick for the user.

Various examples of prior art, remote control devices are known, see for example US-A-5410326 (Steven W. Goldstein); EP-A-0626635 (First Person Inc.) and US-A-5710605 (Ricky D. Nelson), which disclose arrangements enabling the downloading of remote control codes, in general, to enable various devices to be controlled by the remote control device.

### Summary

The invention is set forth in independent claims 1 and 11. Particular embodiments are recited in the dependent claims.

### Brief Description of the Drawings

Figure 1 is a schematic depiction of one embodiment in accordance with the invention;
Figure 2 is a flow chart for an embodiment such as the one shown in Figure 1;
Figures 3A through 3C are depictions of graphical user interfaces useful with the embodiments shown in Figures 1 and 2;
Figure 4 is a flow chart for another embodiment of the invention;
Figure 5 is a flow chart for still another embodiment of the invention;
Figure 6 is a graphical user interface that may be used in another embodiment of the invention; and
Figure 7 is a block diagram showing the RCU and set-top computer system shown in Figure 1.

### Detailed Description

A system 10 for commonly controlling electronic devices includes a remote control unit (RCU) 12 which may control an electronic device such as an audio/visual (A/V) receiver 14, a set-top computer system 16 and a television receiver 18. A variety of other electronic devices may also be controlled by the RCU 12 including a VCR, a DVD player, a stereo system, or a compact disc (CD) player, as additional examples. The RCU 12 is automatically programmed to operate the desired electronic devices through interaction with the system 16.

The system 16 may prompt the user to input information about the devices which the user wishes to have the RCU control. The system 16 may then send information to the RCU 12 to enable the RCU 12 to control those devices regardless of whether the devices are legacy devices or devices which use the IrDA protocols (or some other protocol).

While the present invention is described in connection with several embodiments using infrared controlled devices, the same principles may be applied using radio-frequency controls such as those used in the Bluetooth radio-frequency signals. The Bluetooth system is described at {www.bluetooth.com}.

The system 16 may also be coupled to a network 20. The network connection may enable the system 16 to download additional information to control various remotely controllable devices. The network connection may couple the system 16 to the Internet for example.

The RCU 12 may include a plurality of buttons which allow control over the various functions of remotely controllable devices. For example, the RCU 12 may have buttons which allow a device type such as "TV" or "stereo receiver" to be entered. Thus, when the user wishes to control a particular device, the user may simply press the button associated with that device, such as the TV. The RCU 12 may also include buttons to select different channels, buttons to control volume, and buttons to remotely control other potential functions of various electronic devices.

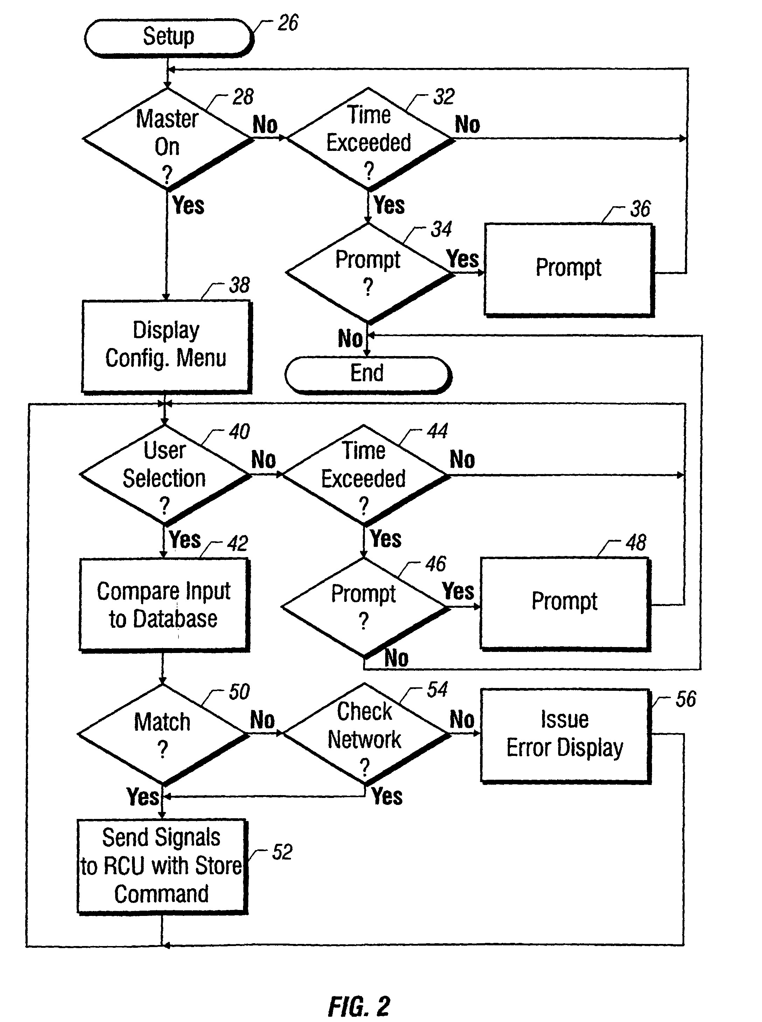

Referring now to Figure 2, setup software 26, which may be resident on the system 16, allows automatic control of electronic devices. In one embodiment of the invention, the flow may begin by determining whether a master (which may be the system 16) has been turned on by a slave (which may be the RCU 12) as determined in diamond 28. If so, the receiver 18 or another display device may be caused to display a configuration menu, as indicated at block 38.

If the master has not been turned on by the slave, a check at diamond 32 determines whether a preset time limit has been exceeded. If not, the flow cycles back to wait for the operation of the master by the slave. If the time period has been exceeded, a check at diamond 34 determines whether a prompt should be provided. If the elapsed time exceeds still another limit, the prompt may not be provided and the flow may be terminated.

Otherwise, the prompt may be provided as a graphical user interface, for example, asking the user to operate the master using the remote control. This may involve turning the master back off and operating it "on" using the remote control.

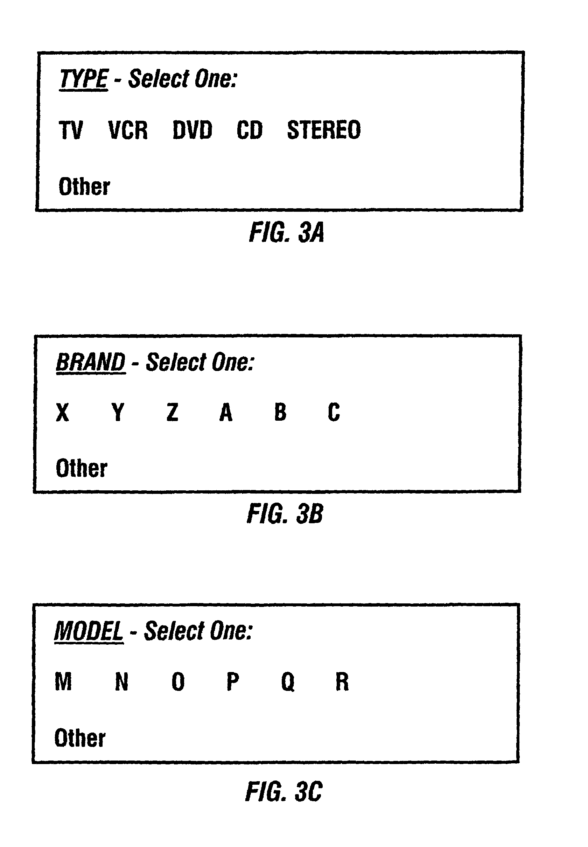

The configuration menu may allow the user to input the type of devices which the user wishes to automatically control using the RCU 12. For example, referring to Figure 3A, a graphical user interface, displayed on the television receiver 18, may ask the user to input the type of device, be it a TV, a VCR, a DVD player, a CD player or a stereo system. Otherwise, the user can input "other" and an additional drop-down menu may be provided or the user may be asked for additional information.

Once the user has selected the device type, the system automatically provides a list of common manufacturers of the type of device selected using a database provided with the system 16, as illustrated in Figure 3B. Again, the user has the option to select "other", and when so selected, the system may either access additional information or display an additional menu of other manufacturers.

Referring to Figure 3C, a graphical user interface may also ask the user to select from among the models available for the given type of device and the selected manufacturer. The user again may select the desired option or may be provided with additional options by selecting the "other" option.

The user may input the selections using the RCU 12. This may be done using a mouse style pointing system or, if desired, each potential selection may be associated with a number or a letter which then may be entered using the keypad provided on the RCU 12.

Referring back to Figure 2, at diamond 40 a check determines whether the user has made all of the required selections. If so, each selection is compared to a database of known information. If not, a check at diamond 44 determines if a preset time period has been exceeded. If the time has elapsed, a screen prompt may be issued as indicated in diamond 46 and block 48.

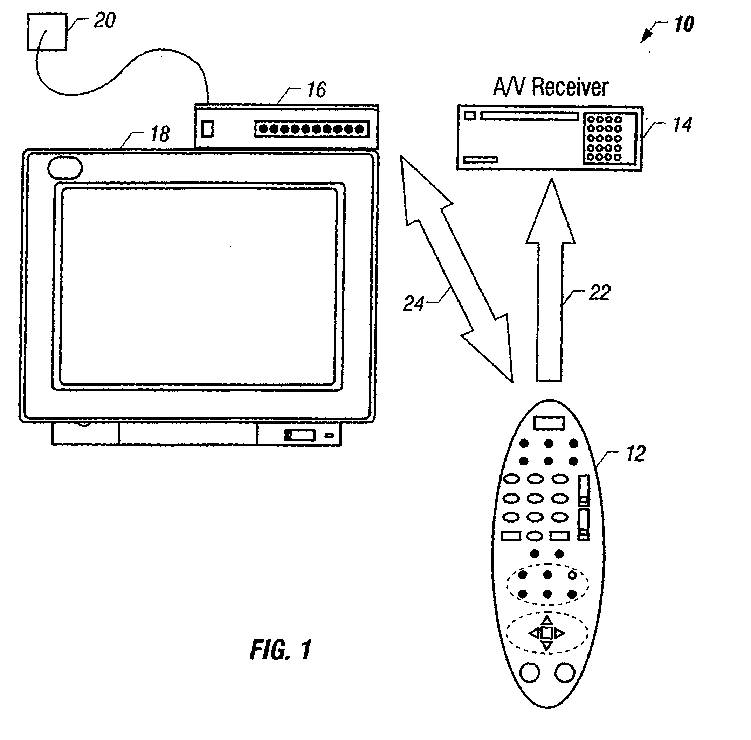

From the database, the required remote control codes can be determined by the system. If each of the selections matches an existing database entry, the appropriate signal information is sent to the RCU 12 by the system 16. In other words, the RCU 12 may be provided with protocols to control a given device. Referring to Figure 1, the information may be provided along the path 24 from the device 16 to the device 12, thereby enabling the device 12 to control the device 14 as indicated at 22. The RCU 12 may also be commanded to store the information in an appropriate format on the RCU 12.

If the user selections do not match any existing database entries for known devices, a network check may be initiated as indicated at diamond 54. In this case, the system 16 may communicate with an external network, for example over a modem connection, to determine whether additional information is available. This modem connection may connect to an additional database, for example over a direct telephone link to a server or over the Internet. In such case, additional information about the requested device may be downloaded to the system 16 allowing the system 16 to proceed, as indicated in block 52, to provide the RCU with the desired information. If no such information can be located, a graphical user interface indicating an error condition may be displayed, as indicated at block 56. In this case, the user may be prompted to program the device in the conventional fashion since the system is unable to automatically provide the information to the RCU 12.

In most cases, the tedious task of programming the various devices may be performed in an automated fashion using the databases and software associated with the system 16. This operation may occur seamlessly and without substantial user involvement in the programming of the RCU 12.

The RCU 12 may operate in one of at least two different fashions. The RCU may have dedicated buttons that correspond to particular controlled devices. For example, the RCU may contain a button that is labeled "TV." When the TV button is pushed, the appropriate commands are sent to the master informing the master that the user now wishes to control the TV. The next button that is pushed, for example, the channel up button, causes the appropriate command to be sent to the master telling it, for example, that the user wishes to go to the next highest channel. The master in turn sends the RCU the necessary codes to increment the channel on the TV. The RCU then takes these codes and sends them, for example using a unidirectional infrared signal, to the TV using the protocols stored in the RCU's memory.

Alternatively, the RCU may contain sufficient memory that the master may send the RCU both the protocols and the necessary codes to control the devices. The RCU saves this information in its local memory. Then, when the user wishes to change the channel on the TV, the user pushes the TV button and this causes the RCU to enter a mode which controls the TV using the pre-sent protocols. Then, when the user pushes the channel up or other control button, the remote control fetches the necessary codes from local memory and sends a unidirectional infrared message using the protocol that is also stored locally on the RCU.

The difference between the two approaches is that in the first case, the master feeds the information to the RCU each time the RCU needs information. In the second case, the master feeds the information needed to do all the different controls for a given device initially, and then the device handles those protocols on its own. In one embodiment of the invention, the information may be provided from the master to the RCU each time the system is operated so that it is not necessary to discard the information when it is desired to switch controlled devices.

In another embodiment of the invention, control over electronic devices may be initiated from a remote location. For example, using a network communication protocol such as electronic mail (e-mail), a message may be sent over the network 20 to a receiver, such as the system 16. This message may be recognized by the system 16 as a command, and the system 16 may implement the appropriate action in accordance with the command. For example, the system 16 may issue commands to the RCU 12 to appropriately control the A/V receiver 14, as one example. Alternatively, the system 16 may directly send commands to a receiver 14.

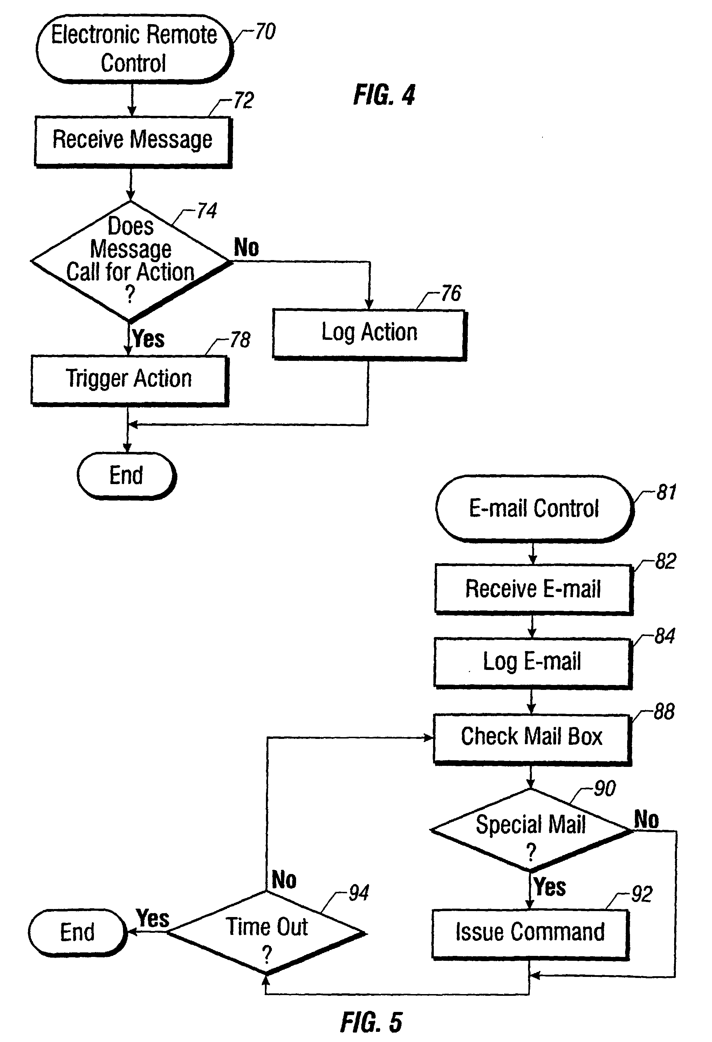

Referring to Figure 4, a message may be received by the system 16 from the network 20 as indicated at block 72. The system 16 determines whether the message calls for a particular action (diamond 74). For example, the message may be intended to communicate information to a receiver. Alternatively, the message may include commands intended to be implemented by the system 16. If the message is merely for communication purposes, it may be logged (block 76) and the flow is complete. If, however, the message is intended to initiate action at the remote location, the action may be implemented (block 78).

The message to be received by the system 16 may be conveyed over the telephone lines, for example, by voice or other means such as e-mail. The message may be deciphered and a determination may be made as to whether the message conveys information only or whether it seeks to initiate an action. For example, the message may contain a header that includes a field which may be used to indicate whether action is intended or merely information is to be exchanged. Thus, when a particular header is recognized, a command may be issued to initiate action. The data contained in the header may provide information about the particular activity to be implemented. This information may be deciphered and the appropriate command may be issued.

As another example, in the case of the system shown in Figure 1, an e-mail message received over the network 20 may be deciphered. If the message calls for programming the A/V receiver 14, the appropriate IrDA-C commands 24 may be issued to the RCU 12, as illustrated in Figure 1. The RCU may then issue commands 22 in the appropriate format to the receiver 14.

As still another alternative, a message containing command information may be transmitted to a separate address that is distinct from the address where messages that are of a non-command format are sent. For example, a separate "command" e-mail message box may be maintained in order to receive command messages. Thus, whenever a message is received in the command message box, a command may be issued by the system 16. Again, data associated with the message may be used to determine the appropriate command. For example, the message may include script that causes an appropriate action to occur.

Similarly, where a voice command is received, speech-to-text translation software may be used to determine whether or not the message is a command message or an information message. The converted text may be scanned for appropriate command language. For example, if the message is intended to be a command message, an appropriate statement or code word may be provided. Then, the caller may be prompted to provide specific information in response to automated questions. The responses may be stored in fields that may be decoded to provide the appropriate actions.

Referring now to Figure 5, initially an electronic mail message may be received as indicated in block 82. The message may then be logged in a mailbox (block 84) and the mailbox may be periodically checked for new messages (block 88). When a new message is identified, a determination (diamond 90) is made as to whether the message is a special message calling for an action. If the message is merely informational, no further steps may be necessary. However, if a special message is received, which may be determined as described previously, the appropriate commands may be issued (block 92). After a check to see if a predetermined time has elapsed (diamond 94), the flow may cycle back to recheck the mail box (block 88).

While one embodiment of the invention may involve infrared commands from the system 16 to the RCU 12 and infrared commands from the RCU 12 to the device 14, the commands may also be in other formats including radio-frequency formats. In addition, some of the commands may be in a radio-frequency format while other commands are in an infrared format, as another example. In one advantageous embodiment, the system 16 may initiate radio-frequency commands which may be received by an RCU 12 or an appropriate pad device. The RCU 12 (or pad device) may decode the radio-frequency commands 24 and issue appropriate infrared commands 22 to the controlled device. The use of radio-frequency commands may advantageously allow devices in different rooms to be controlled from a central location.

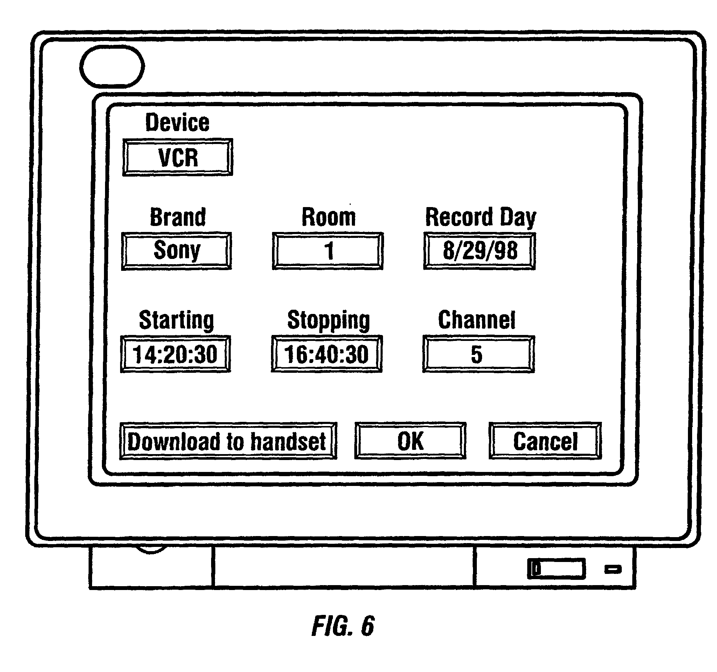

In accordance with still another embodiment, the user interface as shown in Figure 6, may include a plurality of icons or indicia that prompt the user to input information about the type of device to be controlled, its brand, and the room within the building in which it is located. In the illustrative example, the user may be prompted for information necessary to program a VCR. Thus, the user may be prompted for start and stop time, channel and record day.

When the user inputs a given room number or identifier, the system may have a database containing information about what electronic devices may be controlled in a given room. The system 16 may then issue the appropriate commands to control the devices in the selected room.

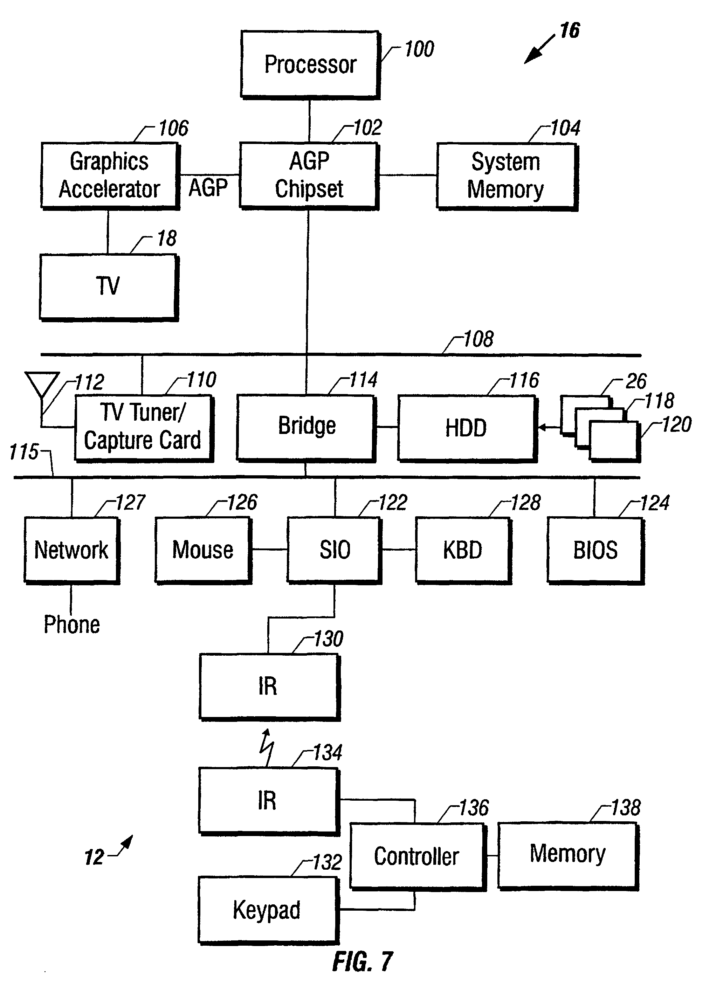

Referring now to Figure 7, an example of a system for providing the capabilities described previously may involve either a computer, a television receiver, a set-top computer system or another appliance. The illustrated system 16 includes a processor 100 coupled to an accelerated graphics port (AGP) chipset 102. AGP is described in detail in the Accelerated Graphics Port Interface Specification, Revision 2.0, published in May 1998 by Intel Corporation of Santa Clara, California.

The AGP chipset 102 may in turn be coupled to system memory 104 and a graphics accelerator 106. The graphics accelerator 106 may be coupled to a TV receiver 18.

The chipset 102 may also be coupled to a bus 108 which in turn may be coupled to a TV tuner/capture card 110. The tuner/capture card 110 may be coupled to a television input 112. The input 112 may, for example, be a conventional TV antenna, a satellite antenna, a cable connection, or other television inputs. The card 110 may receive television signals in one video format and may convert them into a format used by the system 16.

The bus 108 may also be coupled to another bridge 114 which in turn couples a hard disk drive 116. The hard disk drive 116 may store the software 26, the database 118 associated with the graphical user interfaces shown in Figure 3, and the software 120 necessary to download additional information from a network. The hard disk drive 116 may also store the software 70 and/or 81.

The bridge 114 may be coupled to a bus 115 coupled to a serial input/output (SIO) device 122, a network 127 and a basic input/output system (BIOS) 124. The SIO device 122 may interface to a mouse 126 and a keyboard 128. The SIO device may also be coupled to the RCU 12 through an interface 130 to enable the system to receive inputs from a wireless remote control. The network 127 may be, for example, a connection to a telephone network or a local area network. As mentioned previously, the RCU 12 may provide either infrared or radio-frequency signals which may be received by the interface 130.

An infrared interface 130 may, for example, be in accordance with the Infrared Data Association protocols such as, for example, the Serial Infrared Physical Layer Link Specification, version 1.2, dated November 30, 1997. The remote control unit 12 may include a keypad 132 coupled to an infrared transmitter 134 that transmits the infrared signals received by the interface 130. A controller 136 may be provided to control both the transmitter 134 and to receive information from the keypad 132. The controller 136 may have associated with it memory 134, which in one illustrated embodiment may be nonvolatile random access memory (NVRAM). The memory 134 may store the information provided by the system 16 to enable the RCU 12 to provide the appropriate signals to particular electronic devices to be controlled.

The graphical user interfaces described herein are visual representations of memory states. The graphical user interfaces displayed on the display 18 may be stored in a memory such as one or more of the memories 104 or 116.

## Claims

1. A method for enabling an electronic device to be controlled remotely comprising:
receiving information about an electronic device (18);
said method **characterised by**:
determining whether the information needed to remotely control the electronic device is available locally;
if the information is not available locally, downloading additional information from a networking connection including the code needed to allow said device to be remotely controlled; and
communicating the code to a remote control unit (12) to enable the remote control unit to control the device.

2. The method of claim 1 wherein receiving information about an electronic device includes displaying a graphical user interface having data entry fields and receiving information from a user in said data entry fields.

3. The method of claim 1 wherein downloading information includes accessing a web site on the internet.

4. The method of claim 1 wherein communicating the code to a remote control unit (12) includes providing a protocol to enable a particular electronic device (18) to be controlled by said remote control unit (12) and causing said remote control unit (12) to store said protocol.

5. The method of claim 1 further including receiving a message from a network, deciphering said message, and using information contained in said message to control said electronic device.

6. The method of claim 5 wherein receiving a message includes receiving a voice message.

7. A method of controlling an electronic device (18) at a remote location utilising the method of one of claims 1 to 6, further comprising:
receiving a message from an electronic network at a receiver (16) proximate to said electronic device (18);
the method **characterised by**:
determining whether the message provides information or requests an action; and
if said message requests an action, causing said receiver (16) to issue a command to said electronic device (18).

8. The method of claim 7 wherein receiving a message includes receiving an electronic mail message and determining whether said message includes command information for controlling a device.

9. The method of claim 7 wherein receiving a message includes receiving a voice message, converting said message to text and scanning said message for command information for controlling a device.

10. The method of claim 7 including forwarding at least a portion of said message to a remote control device.

11. A program carrier, readable by a processor-based system, storing instructions that cause a processor-based system to:
receive information about an electronic device (18);
said article **characterised by** storing instructions that cause the system to:
determine whether the information needed to remotely control the electronic device is available locally;
if the information is not available locally, download additional information from a networking connection including the code needed to allow said device to be remotely controlled; and
communicate the code to a remote control unit (12) to enable the remote control unit (12) to control the device (18).

12. The program carrier of claim 11 further including instructions that cause a processor-based system to provide information to a remote control unit (12) to allow the remote control unit (12) to control the electronic device (18).

13. The program carrier of claim 11 further including instructions that cause a processor-based system to receive a message from a network, decipher said message, and use information contained in said message to control said electronic device (18).

14. The program carrier of claim 11 further including instructions that cause a processor-based system to receive electronic mail messages which include command information and electronic mail messages which do not include command information, and to determine whether a particular electronic mail message includes command information.

15. A program carrier as claimed in one of claims 11 to 14 further comprising storing instructions that cause the processor-based system to:
receive a message from an electronic network;
the article **characterised by** storing instructions that cause the system to:
determine whether the message provides information or requests an action; and
if said message requests an action, issue a command to an electronic device (18).

16. The program carrier of claim 15 including instructions that cause a processor-based system to receive an electronic mail message and determine whether said message includes command information for controlling an electronic device (18).

17. The program carrier of claim 15 including instructions that cause a processor-based system to receive a voice message, convert said message to text and scan message for command information.

## Patentansprüche

1. Ein Verfahren, das ein elektronisches Gerät in die Lage versetzt, ferngesteuert zu werden, umfassend:
Empfangen von Informationen über ein elektronisches Gerät (18) ;
wobei das Verfahren **gekennzeichnet ist durch**:
Bestimmen, ob die Informationen, die zur Fernsteuerung des elektronischen Geräts benötigt werden, lokal verfügbar sind;
wenn die Informationen nicht lokal verfügbar sind, Herunterladen zusätzlicher Informationen aus einer Netzwerkverbindung einschließlich des Codes, der benötigt wird, um zu gestatten, daß das Gerät ferngesteuert wird; und
Übermitteln des Codes an eine Fernbedienungseinheit (12), um es der Fernbedienungseinheit zu ermöglichen, das Gerät zu steuern.

2. Das Verfahren nach Anspruch 1, wobei das Empfangen von Informationen über ein elektronisches Gerät ein Anzeigen einer graphischen Benutzeroberfläche, die Dateneintragsfelder aufweist, und ein Empfangen von Informationen von einem Benutzer in den Dateneintragsfelder einschließt.

3. Das Verfahren nach Anspruch 1, wobei das Herunterladen von Informationen ein Zugreifen auf eine Web-Site im Internet einschließt.

4. Das Verfahren nach Anspruch 1, wobei das Übermitteln des Codes an eine Fernbedienungseinheit (12) ein Bereitstellen eines Protokolls, das es einem bestimmten elektronischen Gerät (18) gestattet, von der Fernbedienungseinheit (12) gesteuert zu werden, und ein Veranlassen der Fernbedienungseinheit (12) zum Speichern des Protokolls einschließt.

5. Das Verfahren nach Anspruch 1, ferner einschließend ein Empfangen einer Nachricht aus einem Netzwerk, ein Entziffern der Nachricht und ein Verwenden der in der Nachricht enthaltenen Informationen zum Steuern des elektronischen Geräts.

6. Das Verfahren nach Anspruch 5, wobei das Empfangen einer Nachricht ein Empfangen einer Sprachnachricht einschließt.

7. Ein Verfahren zum Steuern eines elektronischen Geräts (18) an einem fernen Ort unter Verwendung des Verfahrens nach einem der Ansprüche 1 bis 6, ferner umfassend:
Empfangen einer Nachricht aus einem elektronischen Netzwerk bei einem Empfänger (16) in der Nähe des elektronischen Geräts (18);
wobei das Verfahren **gekennzeichnet ist durch**:
Bestimmen, ob die Nachricht Informationen zur Verfügung stellt oder eine Aktion anfordert; und
wenn die Nachricht eine Aktion anfordert, Veranlassen des Empfängers (16), ein Kommando an das elektronische Gerät (18) auszugeben.

8. Das Verfahren nach Anspruch 7, wobei das Empfangen einer Nachricht ein Empfangen einer E-Mail-Nachricht und ein Bestimmen, ob die Nachricht Kommandoinformationen zum Steuern eines Geräts enthält, einschließt.

9. Das Verfahren nach Anspruch 7, wobei das Empfangen einer Nachricht ein Empfangen einer Sprachnachricht, ein Konvertieren dieser Nachricht in Text und ein Durchsuchen der Nachricht nach Kommandoinformationen zum Steuern eines Geräts einschließt.

10. Das Verfahren nach Anspruch 7, einschließend ein Weiterleiten wenigstens eines Teils der Nachricht an ein Fernbedienungsgerät.

11. Ein Programmträger, der von einem prozessor-basierten System lesbar ist und Befehle speichert, die ein prozessor-basiertes System veranlassen:
Informationen über ein elektronisches Gerät (18) zu empfangen;
wobei der Gegenstand **gekennzeichnet ist durch** das Speichern von Befehlen, die das System veranlassen:
zu bestimmen, ob die Informationen, die zum Fernsteuern des elektronischen Geräts benötigt werden, lokal verfügbar sind;
zusätzliche Informationen aus einer Netzwerkverbindung, die einen Code einschließen, der benötigt wird, damit das Gerät ferngesteuert werden kann, herunterzuladen, wenn die Informationen nicht lokal verfügbar sind; und
den Code an eine Fernbedienungseinheit (12) zu übermitteln, um der Fernbedienungseinheit (12) das Steuern des Geräts (18) zu ermöglichen.

12. Der Programmträger nach Anspruch 11, ferner enthaltend Befehle, die ein prozessor-basiertes System veranlassen, Informationen an eine Fernbedienungseinheit (12) zur Verfügung zu stellen, um es der Fernbedienungseinheit (12) zu ermöglichen, das elektronische Gerät (18) zu steuern.

13. Der Programmträger nach Anspruch 11, ferner einschließend Befehle, die ein prozessor-basiertes System veranlassen, eine Nachricht aus einem Netzwerk zu empfangen, die Nachricht zu entziffern, und in der Nachricht enthaltene Informationen zu verwenden, um das elektronische Gerät (18) zu steuern.

14. Der Programmträger nach Anspruch 11, ferner einschließend Befehle, die ein prozessor-basiertes System veranlassen, E-Mail-Nachrichten zu empfangen, welche Kommandoinformationen enthalten, sowie E-Mail-Nachrichten, welche keine Kommandoinformationen enthalten, und zu bestimmen, ob eine bestimmte E-Mail-Nachricht Kommandoinformationen enthält.

15. Ein Programmträger nach einem der Ansprüche 11 bis 14, ferner umfassend das Speichern von Befehlen, die das prozessor-basierte System veranlassen,
eine Nachricht aus einem elektronischen Netzwerk zu empfangen;
wobei der Artikel **gekennzeichnet ist durch** das Speichern von Befehlen, die das System veranlassen:
zu bestimmen, ob die Nachricht Informationen zur Verfügung stellt oder eine Aktion anfordert; und
ein Kommando an ein elektronisches Gerät (18) auszugeben, wenn die Nachricht eine Aktion anfordert.

16. Der Programmträger nach Anspruch 15, enthaltend Befehle, die ein prozessor-basiertes System veranlassen, eine E-Mail-Nachricht zu empfangen und zu bestimmen, ob die Nachricht Kommandoinformationen zum Steuern eines elektronischen Geräts (18) enthält.

17. Der Programmträger nach Anspruch 15, einschließend Befehle, die ein prozessor-basiertes System veranlassen, eine Sprachnachricht zu empfangen, die Sprachnachricht in Text zu konvertieren und die Nachricht nach Kommandoinformationen zu durchsuchen.

## Revendications

1. Une méthode permettant de commander un appareil électronique à distance consistant à ;
recevoir des informations relatives à un appareil électronique (18) ;
ladite méthode étant **caractérisée par** :
l'examen de la disponibilité locale ou non de l'information nécessaire à commander à distance l'appareil électronique ;
le téléchargement d'informations complémentaires, si l'information n'est pas disponible localement, via une connexion à un réseau ; lesdites informations contenant le code requis pour permettre la commande à distance dudit appareil ; et
la communication du code à une unité de commande à distance (12) pour permettre à ladite unité de commande (12) de commander à distance ledit appareil électronique (18).

2. Méthode selon la revendication 1 dans laquelle la réception des informations relatives à un appareil électronique comprend un affichage d'une interface graphique utilisateur présentant des champs d'entrée de données et recevant dans ces champs d'entrée de données des informations de l'utilisateur.

3. Méthode selon la revendication 1 dans laquelle le téléchargement d'information se fait par accès à un site web sur Internet.

4. Méthode selon la revendication 1 dans laquelle la communication du code à une unité de commande à distance (12) comporte la fourniture d'un protocole de communication pour permettre à un appareil électronique particulier (18) d'être commandé par ladite unité de commande à distance (12), ledit protocole de communication étant alors mémorisé par ladite unité de commande à distance (12).

5. Méthode selon la revendication 1 comportant, de plus,
une réception d'un message fourni par un réseau,
un décodage dudit message, et
une utilisation desdites informations contenues dans ledit message pour commander ledit appareil électronique.

6. Méthode selon la revendication 5 dans laquelle la réception d'un message comprend une réception d'un message vocal.

7. Méthode de commande à distance d'un appareil électronique (18) utilisant la méthode selon l'une des revendications 1 à 6, comprenant en outre :
une réception d'un message d'un réseau électronique sur un récepteur (16) proche dudit appareil électronique (18) ;
la méthode étant **caractérisée par** :
un examen consistant à savoir si le message fournit des informations ou requiert une action ; et
une fourniture par ledit récepteur (16) d'une commande a destination dudit appareil électronique (18), dans le cas où ledit message requiert une action.

8. Méthode selon la revendication 7 dans laquelle la réception d'un message comprend la réception d'un message électronique ainsi que l'examen consistant à savoir si ledit message contient des informations de commande pour commander un appareil.

9. Méthode selon la revendication 7 dans laquelle la réception d'un message comprend une réception d'un message vocal, la conversion de ce message en texte et l'analyse dudit message pour y rechercher des informations de commande pour commander un appareil.

10. Méthode selon la revendication 7 comprenant un routage d'au moins une portion dudit message à un appareil de commande à distance.

11. Un support de programme, lisible par un système à microprocesseur, mémorisant des instructions qui activent un système à microprocesseur pour ;
recevoir des informations relatives à un appareil électronique (18) ;
ledit support étant **caractérisé en ce qu'**il mémorise des instructions qui activent le système pour :
examiner si les informations requises pour commander à distance l'appareil électronique sont disponibles localement ;
télécharger des informations supplémentaires, y compris le code requis pour pouvoir commander à distance ledit appareil, depuis une connexion à un réseau, dans le cas où lesdites informations ne sont pas disponibles localement ; et
communiquer le code à une unité de commande à distance (12) pour permettre à l'unité de commande (12) de commander ledit appareil (18).

12. Le support de programme selon la revendication 11 comportant de plus des instructions qui activent un système à base de processeur pour fournir des informations à une unité de commande à distance (12) pour permettre à l'unité de commande (12) de commander l'appareil électronique (18).

13. Le support de programme selon la revendication 11 comportant de plus des instructions qui activent un système à base de processeur pour recevoir un message d'un réseau, décoder ledit message, et utiliser les informations contenues dans ledit message pour commander ledit appareil (16).

14. Le support de programme selon la revendication 11 comportant de plus des instructions qui activent un système à base de processeur pour recevoir des messages électroniques contenant des informations de commande et des messages électroniques ne contenant pas d'informations de commande, et pour vérifier si un message électronique particulier contient des informations de commande.

15. Un support de programme selon l'une quelconque des revendications 11 à 14, comportant de plus des instructions de mémorisation qui activent le système à base de processeur pour:
recevoir un message d'un réseau électronique ;
le support étant **caractérisé en ce qu'**il stocke des instructions activant ledit système pour :
examiner si le message fournit des informations ou requiert une action ; et
transmettre une commande vers un appareil électronique (18), si ledit message requiert une action.

16. Le support de programme selon la revendication 15 comportant des instructions activant un système à base de processeur pour recevoir un message électronique et examiner si ledit message contient des informations pour commander un appareil électronique (18).

17. Le support de programme selon la revendication 15 comportant des instructions qui activent un système à base de processeur pour recevoir un message vocal, convertir ledit message vocal en texte et examiner le message pour y rechercher des informations de commande.
